# EUROPÄISCHE PATENTSCHRIFT

(11) **EP 0 574 471 B1**
(45) Veröffentlichungstag und Bekanntmachung des Hinweises auf die Patenterteilung: **02.11.1994**
(21) Anmeldenummer: 92906006.9
(22) Anmeldetag: 05.03.1992
(51) Int. Cl.: G06K 1/12

(54) **CODIERVERFAHREN UND CODIERVORRICHTUNG**
CODING PROCESS AND CODING DEVICE
PROCEDE ET DISPOSITIF DE CODAGE

(30) Priorität: 05.03.1991 DE 4107012
(43) Veröffentlichungstag der Anmeldung: 22.12.1993
(73) Patentinhaber: RUDOLF WILD GmbH & Co. INTERNATIONAL KG, D-69214 Eppelheim (DE)
(72) Erfinder: WILD, Rainer, D-6900 Heidelberg (DE); MUKROWSKY, Michael, D-6906 Leimen 2 (DE)
(74) Vertreter: Grünecker, Kinkeldey, Stockmair & Schwanhäusser Anwaltssozietät
(86) Internationale Anmeldenummer: EP9200497
(87) Internationale Veröffentlichungsnummer: WO9215963

(56) Entgegenhaltungen:
- EP-A- 0 354 362
- GB-A- 2 134 449
- GB-A- 2 140 246
- US-A- 3 803 637

## Beschreibung

Die Erfindung betrifft ein Codierverfahren und eine Codiervorrichtung zum Aufbringen einer optisch lesbaren Codemarkierung auf ein Behältnis, insbesondere auf eine Kunststoffflasche, bei welchen das Behältnis zum Aufbringen der Codemarkierung mittels einer Fördereinrichtung an einer Codierstation vorbeigeführt wird, in welcher die Codemarkierung mit einem Laserstrahl in Form von Vertiefungen aufgebracht wird.

Ein solches Codierverfahren und eine solche Codiervorrichtung sind aus der europäischen Patentanmeldung EP-A-0 354 362 bekannt. Mittels dieses Verfahrens und dieser Vorrichtung können genaue Angaben über die Herstellung der Flasche auf die Flasche aufgebracht werden, z.B. das Herstellungsdatum, den Ort der Herstellung und gegebenenfalls Daten über den Auslieferungsweg und das abzufüllende Medium.

Durch Auslesen des Codes ist somit im nachhinein genau nachprüfbar, zu welchem Zeitpunkt und mit welcher Maschine die Flasche hergestellt wurde. Dies ist insbesondere beim Auffinden von Herstellungsfehlern von großer Bedeutung. Des weiteren ist ein solches Codierverfahren bei der Verwendung von Kunststoffmehrwegflaschen sehr wichtig, da die Anzahl der Umlaufzyklen von Mehrwegflaschen begrenzt ist.

Gemäß dem oben angegebenen Verfahren und Vorrichtung kann bei jedem Füllvorgang eine Codemarkierung auf die Flasche aufgebracht werden, die vor dem nächsten Füllvorgang ausgelesen werden kann. Somit kann vor Abfüllen der Flasche überprüft werden, ob die Flasche noch einmal gefüllt werden kann oder wegzuwerfen ist.

Bei dem herkömmlichen Verfahren wird die Codemarkierung am unteren Rand der Seitenfläche der Flasche von der Seite her aufgebracht. Hierzu wird die Flasche zwischen einem unteren Teller und einem oberen Teller eingespannt und mittels eines Elektromotors oder eines Zahnradgetriebes gedreht. Diese Vorrichtung, die notwendig ist, um die Flasche zu drehen, ist aufwendig und teuer. Ferner hat das Aufbringen der Codemarkierung an der unteren Seitenfläche der Flasche den Nachteil, daß die Codemarkierung leicht beschädigt und somit unlesbar oder zumindest schlechter lesbar wird. Denn wenn die Flaschen in Transport- oder Aufbewahrungsbehälter gestellt werden, stoßen sie mit ihrem seitlichen Rand entweder gegen den Behälter selbst oder gegen andere sich im Behälter befindende Flaschen. Außerdem wird durch das Aufbringen der Codemarkierung die Flaschenwand dünner und zwar umso mehr, je öfter die Flasche gefüllt wird, da bei jedem Füllvorgang eine weitere Codemarkierung (Umlaufzyklus) aufgebracht wird. Hierdurch wird die Stabilität der Flasche erheblich beeinträchtigt, da die Kunststoffmehrwegflaschen in der Regel dünnwandig ausgebildet sind. Dies ist insbesondere am unteren Rand der Flasche von Bedeutung, da dort das Hauptgewicht des Flascheninhaltes lastet.

Der Erfindung liegt daher die Aufgabe zugrunde, ein Codierverfahren und eine Codiervorrichtung zum Aufbringen einer optisch lesbaren Codemarkierung auf eine Flasche zu schaffen, mit welchen die Codemarkierung einfacher aufgebracht werden kann als im gattungsbildenden Stand der Technik, die Stabilität der Flasche nicht beeinträchtigt und die Codemarkierung gegen Verkratzen unempfindlich ist.

Diese Aufgabe wird erfindungsgemäß durch ein Codierverfahren mit den Merkmalen des Anspruchs 1 und eine Codiervorrichtung mit den Merkmalen des Anspruchs 13 gelöst.

Da die Flasche bezüglich der Fördereinrichtung fixiert ist, ist weder das Anbringen von Tellern zum Drehen der Flasche noch ein Motor zu deren Antrieb erforderlich. Dadurch werden das Verfahren und die Vorrichtung erheblich vereinfacht und billiger. Gleichzeitig erzielt man eine wesentliche Kapazitätserhöung, dadurch bedingt, daß aufgrund des schnell zu steuernden Codierverfahrens (Ablenkspiegel) die Schreibgeschwindigkeit wesentlich erhöht werden kann.

Da der Laserstrahl von oben oder von unten im wesentlichen entlang der Flaschenachse oder unter einem geringen Neigungswinkel zur Flaschenachse auf eine im wesentlichen horizontale Fläche der Flasche gelenkt wird, kann die Codemarkierung symmetrisch zur Flaschenachse aufgebracht werden. Nur dadurch ist gewährleistet, daß die Intensität des auf die Flaschenoberfläche auftreffenden Laserlichts pro Raumwinkelelement bezüglich der Flaschenachse konstant ist. Nur so wird ein leicht kontrollierbares Aufbringen einer gleichmäßigen Codemarkierung gewährleistet. Würde man auf eine feststehende Flasche die Codemarkierung mit einem im wesentlichen horizontal auf die Seitenfläche der Flasche auftreffenden Laserstrahl erzeugen, so würden unterschiedliche Ausschnitte der Flaschenoberfläche aufgrund des verschiedenen Abstandes zu der Laserstrahlquelle mit unterschiedlicher Intensität beleuchtet; somit wäre es schwierig oder gar nicht möglich, eine gleichmäßige Codemarkierung entlang der Flaschenoberfläche aufzubringen.

Da der Laserstrahl auf eine im wesentlichen horizontale Fläche der Flasche gelenkt wird, kann die Codemarkierung an eine Stelle der Flaschenoberfläche angebracht werden, an welcher die Codemarkierung nicht durch seitliches Anstoßen an Behälterwände oder andere Flaschen beschädigt wird oder an welcher Stelle die Codemarkierung die Stabilität der Flasche beeinträchtigt.

Gemäß einer günstigen Weiterbildung der Erfindung wird die Codemarkierung auf die Oberseite eines an der Flasche angebrachten Supportringes aufgebracht. Da dieser Supportring dick und stabil ausgebildet sein kann und keine tragende Funktion des Flascheninhaltes übernimmt, wird durch das Aufbringen der Codemarkierung die Stabilität der Flasche an keiner Stelle beeinträchtigt, auch wenn die Flaschenwandung sehr dünn ausgebildet ist, was insbesondere bei Kunststoffmehrwegflaschen in der Regel der Fall ist.

Gemäß einem weiteren vorteilhaften Ausführungsbeispiel der Erfindung kann die Codemarkierung auf eine eingezogene Bodenfläche der Flasche angebracht werden. Die Bodenfläche ist auch bei Kunststoffmehrwegflaschen verstärkt ausgebildet, so daß durch das Aufbringen der Codemarkierung die Stabilität der Flasche nicht beeinträchtigt wird. Da die Bodenfläche eingezogen ausgebildet ist, wird die Codemarkierung auch beim Aufstellen der Flasche auf den Boden nicht beschädigt.

Es ist günstig, die die Codemarkierung bildenden Vertiefungen symmetrisch zu der Flaschenachse anzubringen, da dann die die Vertiefung erzeugende Laserlichtintensität für jede Vertiefung gleich ist. Es ist außerdem vorteilhaft, die Codemarkierungen aus strichförmigen oder punktförmigen Vertiefungen zu bilden, da so ein leicht maschinenlesbarer, optisch erkennbarer Code entsteht. Das Auslesen wird weiter vereinfacht, wenn die Vertiefungen mit einer definierten Tiefe von bevorzugt > 1 um - 120 um, speziell 80 - 90 um, ausgebildet werden. Werden außerdem die die Codemarkierungen bildenden Vertiefungen zeitlich nacheinander aufgebracht, so muß zum Aufbringen der Codemarkierung keine Maske verwendet werden, was das Verfahren und die Vorrichtung weiter vereinfacht und kostengünstiger macht. Durchläuft die Flasche ferner eine Inspektionsvorrichtung, in welcher die Codemarkierung mittels einer elektronischen Kamera aufgenommen wird, so kann ein Barcode ohne Schwierigkeiten erkannt werden. Es ist nicht nötig, beim Auslesen die Codemarkierung abzuscannen. Außerdem sind einfache Vertiefungen, wie sie mit dem Laserstrahl direkt aufgeschrieben werden, also mit glatter Grundfläche, leicht zu erkennen; d.h. es muß keine Grundfläche mit besonderer Reflexionseigenschaften erzeugt werden und somit kann das Einfügen von Gittern oder Sieben in den Strahl zum Erzielen der Raster unterbleiben. Das Verfahren wird noch weiter vereinfacht, wenn die Bewegung des Laserstrahls zum Aufbringen der Codemarkierung mit einer Recheneinheit gesteuert wird, mit welcher auch ein Auslesen der mit der elektronischen Kamera aufgenommenen Codemarkierung und eine Auswertung der Codemarkierung erfolgt.

Außerdem hat es sich als sehr vorteilhaft erwiesen, wenn beim Aufbringen oder unmittelbar nach dem Aufbringen der Codemarkierung die Stelle, an der die Markierungen aufgebracht werden, einem Druckluftstrahl ausgesetzt wird. Dadurch können Partikel, die beim Erzeugen der Vertiefungen losgelöst werden, sofort abgeblasen werden und setzen dadurch die entstandenen Vertiefungen nicht zu. Dies garantiert eine gleichmäßige Tiefe und damit auch eine gleichmäßig gute Lesbarkeit der Vertiefungen ohne Störsignale.

Bei einer bevorzugten Ausführungsform der Codiervorrichtung ist in der Inspektionsvorrichtung, durch welche die Flaschen mit der Fördereinrichtung gefördert werden, eine CCD-Kamera zum Aufnehmen der Codemarkierung vorgesehen.

Bei einer bevorzugten Weiterbildung der Erfindung umfaßt die Ablenkeinrichtung Ablenkspiegel, die mittels der Steuereinheit so verkippt werden, daß der Laserstrahl die zur Erzeugung der Codemarkierung notwendige Bewegung beschreibt. Durch eine solche Anordnung kann der Laserstrahl besonders einfach auf die Flaschenfläche gelenkt werden.

Bei einem bevorzugten Ausführungsbeispiel der Erfindung sind die Ablenkspiegel so angeordnet, daß der Laserstrahl auf die Oberfläche des an der zu codierenden Flasche angeordneten Supportringes gelenkt wird. Dabei ist es günstig, wenn der Laser oberhalb der zu codierenden Flasche angeordnet ist. Bei dieser Anordnung genügt es, vier Ablenkspiegel vorzusehen, von welchen zwei der Ablenkspiegel während des Aufbringens der Codemarkierung auf die Flaschen feststehen und der dritte und vierte der Ablenkspiegel mittels der Steuereinheit zum Aufbringen der Codemarkierung verkippt werden. Zum Aufbringen der Codemarkierung müssen dann nur zwei Spiegel bewegt werden. Es ist dabei insbesondere einfach, den ersten feststehenden Ablenkspiegel so anzuordnen, daß er den Laserstrahl senkrecht nach unten ablenkt, den zweiten fesstehenden Ablenkspiegel so anzuordnen, daß dieser den Laserstrahl in eine horizontale Ebene in Richtung zu der Codierstation hin ablenkt und den dritten ansteuerbaren Spiegel so anzuordnen, daß er den Strahl steuerbar in eine horizontale Richtung ablenkt und ein vierter Spiegel eine Bewegung des Laserstrahls in einer dazu senkrechten Richtung nach unten ermöglicht. Der von dem vierten Spiegel nach unten abgelenkte Laserstrahl verläuft im wesentlichen entlang der Symmetrieachse der zu codierenden Flasche.

Bei einem weiteren vorteilhaften Ausführungsbeispiel der Vorrichtung kann der Laser so angeordnet werden, daß der Laserstrahl von der der Codierstation zugewandten Seite des Lasers in einer horizontalen Ebene in Richtung zu der Codierstation hin mit einem vertikalen Abstand zu der Codierstation emittiert wird. Bei dieser Anordnung genügt es, zwei Ablenkspiegel vorzusehen, von welchen der erste während des Aufbringens der Codemarkierung auf die Flasche feststeht und so angeordnet ist, daß der Laserstrahl horizontal in einem etwa senkrechten Winkel abgelenkt wird. Der zweite der Ablenkspiegel kann mittels der Steuereinheit zum Aufbringen der Codemarkierung auf die Fläche der Flasche verkippt werden und ist so angeordnet, daß der Laserstrahl nach unten auf die Fläche mit horizontaler Komponente, z.B. den Supportring, der Flasche gelenkt wird.

Es ist ferner vorteilhaft, die elektronische Kamera in Bewegungsrichtung der Fördereinrichtung hinter der Codierstation oberhalb der codierten Flasche anzuordnen, so daß die Codemarkierung auf der Flasche direkt von oben fotografiert werden kann. Dies hat den Vorteil, daß die Codemarkierung sofort nach ihrem Aufbringen auf die Flasche überprüft werden kann. Dabei können Fehler beim Aufbringen der Codemarkierung sofort bemerkt werden, so daß eine Flasche mit einer fehlerhaften Codemarkierung sofort aussortiert werden kann. Ist die elektronische Kamera unmittelbar über dem oberen Ende der Flasche angeordnet, so kann die Codemarkierung wegen des geringen Abstandes zu der Kamera besonders deutlich aufgenommen werden.

Es kann auch günstig sein, die elektronische Kamera beabstandet zu dem oberen Ende der Flaschen anzuordnen, da es dann besonders einfach ist, die Kamera an der gleichen stabilen Unterlage zu befestigen, auf welcher auch der Laser angeordnet ist.

Ferner kann es günstig sein, die Ablenkspiegel so anzuordnen, daß der Laserstrahl auf die eingezogene Bodenfläche der zu codierenden Flasche gelenkt wird.

Dies ist günstig, wenn eine Flasche verwendet werden soll, an der kein Supportring angebracht ist.

Dabei ist es ferner günstig, wenn die elektronische Kamera in Bewegungsrichtung der Fördereinrichtung hinter der Codierstation und unterhalb der codierten Flasche angeordnet ist, so daß die Codemarkierung auf der Bodenfläche der Flasche fotografiert werden kann.

Im folgenden ist die Erfindung anhand der Zeichnung näher beschrieben. Es zeigt:
- Fig. 1: eine Seitenansicht einer erfindungsgemäßen Codiervorrichtung,
- Fig. 2: eine Seitenansicht eines nach der erfindungsgemäßen Codiervorrichtung codierten Flasche,
- Fig. 3: eine Draufsicht auf die Flasche aus Fig. 2,
- Fig. 4: eine Seitenansicht eines erfindungsgemäßen Ausführungsbeispiels der Codiervorrichtung aus Fig. 1, und
- Fig. 5: eine Draufsicht auf ein weiteres erfindungsgemäßes Ausführungsbeispiel der Codiervorrichtung aus Fig. 1.

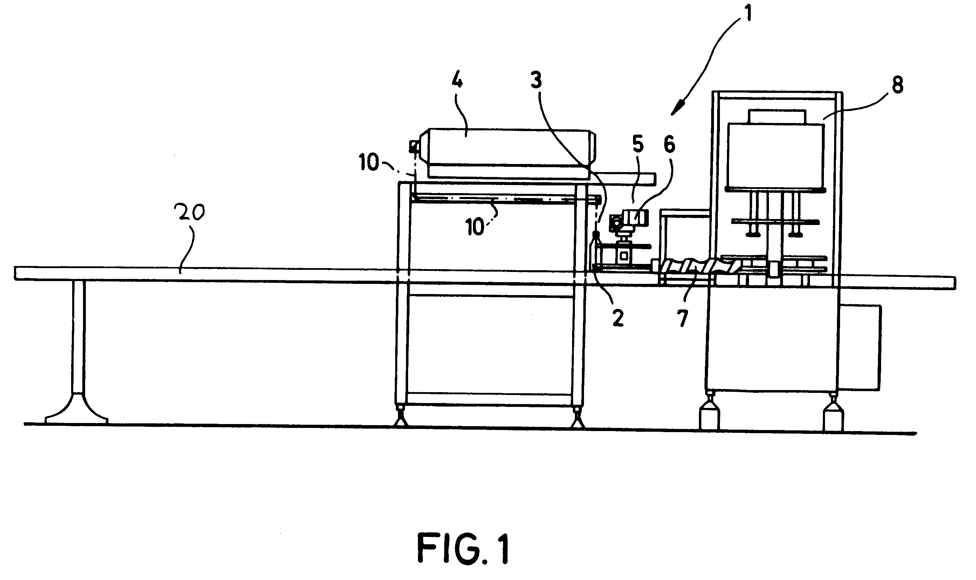

Fig. 1 zeigt als Beispiel eine erfindungsgemäße Codiervorrichtung 1, die in einer Flaschenfertigungslinie angeordnet ist. Eine Flasche 2 wird auf eine in der Zeichnung nur schematisch dargestellten Fördervorrichtung 20 zu einer Codierstation 3 gefördert. In der Codierstation 3 bleibt die Flasche 2 relativ zu der Fördervorrichtung fixiert. Ein Laser 4 ist oberhalb der Flasche 2 angeordnet, so daß der Laserstrahl von oben auf eine Fläche mit einer horizontalen Komponente der Flasche 2 gelenkt wird, und die Codemarkierung auf die Fläche aufgebracht wird. Danach wird die Flasche 2 von der Fördervorrichtung einer Inspektionsvorrichtung 5 zugeführt, in welcher die Codemarkierung von einer CCD-Kamera 6 aufgenommen wird. Danach wird die Flasche 2 über eine Einteilschnecke 7 z.B. einer Füllvorrichtung 8 zugeführt, in der die codierten Flaschen gefüllt werden. In diesem Beispiel wird in der Codierstation 3 auf die Flasche 2 eine Codemarkierung aufgebracht, die angibt, daß die Flasche 3 ein weiteres Mal gefüllt wird. In der Inspektionsvorrichtung 5 wird dann die Richtigkeit der in der Codierstation 3 aufgebrachten Codemarkierung überprüft; außerdem wird gleichzeitig festgestellt, wie häufig die Flasche 2 bereits gefüllt wurde und ob eine weitere Füllung vorgenommen werden soll. Danach wird entschieden, ob die Flasche 2 zur Füllstation 8 transportiert oder aussortiert wird. Die Steuerung zum Aufbringen der Codemarkierung auf die Flasche 2 in der Codierstation 3 wird dann mit der gleichen in der Figur nicht gezeigten Recheneinheit vorgenommen, mit welcher auch das Aufnehmen und Auswerten der Codemarkierung in der Inspektionsvorrichtung 5 erfolgt. Da die Flasche 2 auch während des Aufbringens der Codemarkierung in der Codierstation 3 bezüglich der Transporteinrichtung fixiert ist und das Aufbringen der Codemarkierung mittels der Bewegung des mit einer Ablenkeinrichtung und Steuereinheit bewegten Laserstrahls des Lasers 4 erfolgt, ist diese Anordnung einfach und kostengünstig, da keine Teller zum Drehen der Flasche 2 und kein Motor zur Ansteuerung der Teller notwendig ist.

Selbstverständlich ist die Verwendung der Codiervorrichtung 1 nicht auf den hier dargestellten Einsatz bei einer Flaschenfertigungslinie beschränkt. Die Codiervorrichtung 1 kann in jeder Art von Vorrichtungen, in welchen Flaschen weiterverarbeitet, weiterverwendet oder kontrolliert werden, an einer geeigneten Stelle eingesetzt werden, z.B. in einer Etikettiermaschine nach einer Station, in welcher die Flaschen hergestellt wurden, nach dem Aufsetzen von Schrumpfhülsen etc.

Ferner sind auch Anwendungen denkbar, bei welchen die Inspektionsvorrichtung 5 vor der Codierstation 3 oder einem anderen Ort in einer Flaschenvorrichtung angeordnet wird, wenn dies, z.B. aus Platzgründen oder sonstigen Gründen zweckmäßig erscheint.

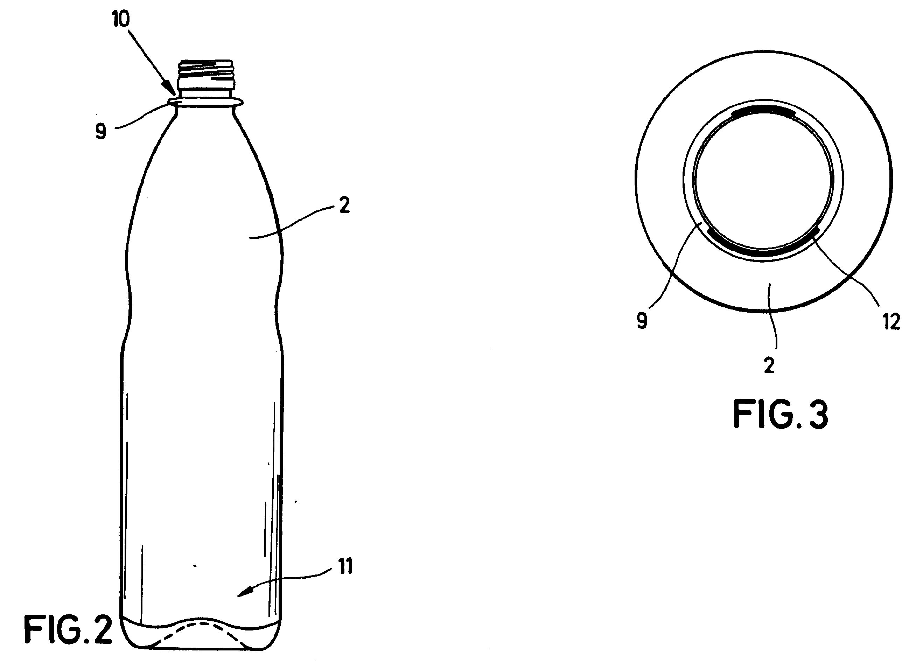

Ferner kann mit der erfindungsgemäßen Anordnung der Codiervorrichtung 1 die Codemarkierung auf einem Supportring 9 der Flasche 2, die in Fig. 2 näher dargestellt ist, mit einem Laserstrahl 10 aufgebracht werden. Dies hat den Vorteil, daß die Stabilität der Flasche durch das Aufbringen der Codemarkierung nicht beeinträchtigt wird, da der Supportring 9 keine tragende Funktion hat, wie z.B. das untere Ende 11 der Seitenwand der Flasche 2. Außerdem ist eine auf dem Supportring 9 aufgebrachte Codemarkierung gegen Verkratzen unempfindlich, da der Supportring 9 nicht dem ständigen Anstoßen in Aufbewahrungsbehältern für die Flaschen 2 ausgesetzt ist, wie z.B. der untere Teil 11 der Seitenwand der Flasche 2.

Fig. 3 zeigt den Supportring 9 der Flasche 2, auf welchen eine Codemarkierung 12 aufgebracht ist. Der eine Teil der Codemarkierung 12 kann z.B. genaue Daten über die Herstellung, wie Herstellungsdatum, Schicht, in der die Flasche 2 hergestellt wurde, und Linie, auf welcher die Flasche 2 bei der Herstellung befördert wurde, beinhalten; der zweite Teil der Codemarkierung 12 kann z.B. Information darüber enthalten, wie oft die Flasche 2 bereits gefüllt wurde und mit welchem Medium abgefüllt werden sollte. Bei dieser Art des Aufbringens der Codemarkierung 12 auf den Supportring 9 läßt sich die Tiefe der die Codemarkierung 12 bildenden Vertiefungen besonders gleichmäßig erzeugen, da die dort auf den Supportring 9 auftreffende Intensität des Laserstrahls 10 pro Vertiefung dieselbe ist.

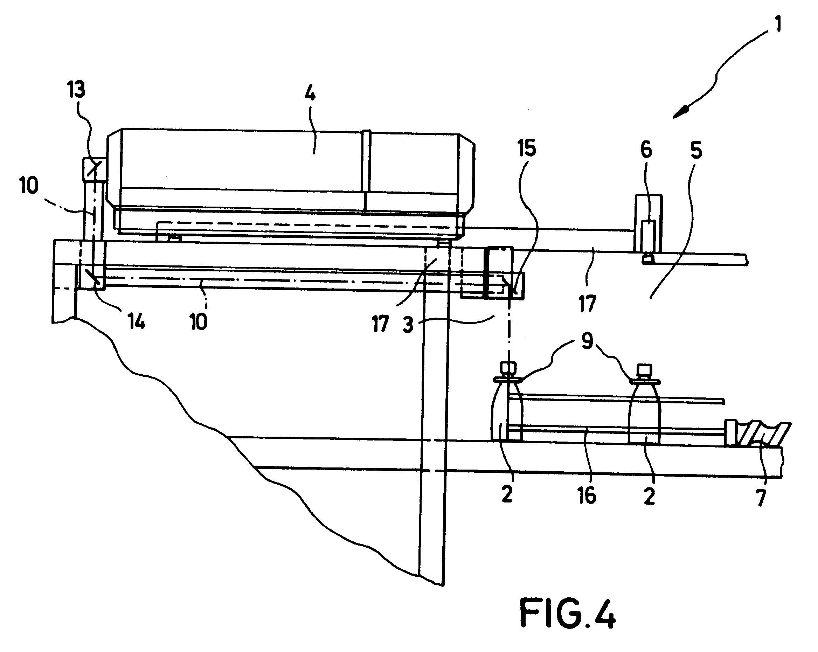

Fig. 4 zeigt ein bevorzugtes Ausführungsbeispiel der Erfindung, bei welchem der Laserstrahl 10 des oberhalb der Flaschen 2 angeordneten Lasers 4 über zwei feststehende Ablenkspiegel 13, 14 und einen mittels einer nicht abgebildeten Steuereinheit ablenkbaren Ablenkspiegel 15 von oben auf den Supportring 9 der Flasche 2 gelenkt wird. Bei diesem Ausführungsbeispiel wird der Laserstrahl 10 von dem Laser 4 zunächst in einer horizontalen Ebene in eine Richtung von der Codierstation 3 weg emittiert, so daß kein Streulicht des ursprünglichen Laserstrahls 10 in die Codierstation 3 fällt und daher dort nicht abgeschirmt werden muß und keine Überlagerung der Teilstrahlen des Lasers 4 entsteht.

Von dem feststehenden Ablenkspiegel 13 wird der Laserstrahl senkrecht nach unten abgelenkt, daraufhin wird er von dem zweiten feststehenden Ablenkspiegel 14 in eine horizontale Ebene, in Richtung zu der Codierstation hin gelenkt. Der Laserstrahl 10 trifft dann auf den dritten ansteuerbaren Ablenkspiegel 15, von welchem der Laserstrahl 10 im wesentlichen entlang der Symmetrieachse der zu codierenden Flasche verläuft und so auf den Supportring 9 der Flasche 2 gelenkt wird, daß er dort die Codemarkierung 12 aufbringt.

Anstelle des dritten Spiegels können ein dritter und ein vierter ansteuerbarer Spiegel angeordnet sein. Der dritte ansteuerbare Spiegel ist dann so angeordnet, daß er den Laserstrahl 10 steuerbar in eine horizontale Richtung ablenkt und der vierte Spiegel ermöglicht dann eine Bewegung des Laserstrahls 10 in einer dazu senkrechten Richtung nach unten. Der von dem vierten Spiegel nach unten abgelenkte Laserstrahl 10 verläuft im wesentlichen entlang der Symmetrieachse der zu codierenden Flasche.

Nach dem Aufbringen der Codemarkierung 12 auf den Supportring 9 wird die Flasche 2 mittels der Fördereinrichtung 16 zu der Inspektionsvorrichtung 5 gefördert. Dort ist die CCD-Kamera 6 oberhalb der Flasche 2 angeordnet und an der Unterlagen 17, auf welcher der Laser 4 angeordnet ist, stabil befestigt. Mittels der CCD-Kamera 6 wird ein Bild der auf dem Supportring 9 aufgebrachten Codemarkierung 12 aufgenommen, dessen Daten der gleichen Recheneinheit zugeführt werden, mit welcher der ansteuerbare Spiegel 15 abgelenkt wird. Durch das Verwenden nur einer Recheneinheit wird das System vereinfacht. Fehler, die beim Aufbringen der Codemarkierung in der Codierstation 3 entstehen, werden von der Inspektionsvorrichtung 5 sofort erkannt und die Flasche 2 kann dann aus der Codiervorrichtung 1 herausgenommen werden, bevor sie der nächsten Station, z.B. der Füllstation, zugeführt wird. Außerdem kann z.B. in der Codierstation 3 vor einem neuen Füllvorgang eine Codemarkierung aufgebracht werden, die angibt, daß die Flasche 2 ein weiteres Mal gefüllt wird. In der Inspektionsvorrichtung 5 kann überprüft werden, wie häufig die Flasche 2 bereits gefüllt wurde und ob noch ein weiterer Füllvorgang durchgeführt werden soll.

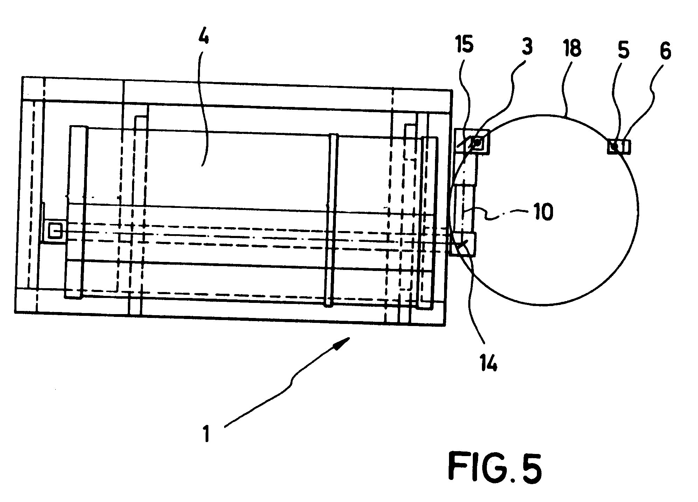

Ein weiteres Ausführungsbeispiel der Erfindung ist in Fig. 5 dargestellt. Dort ist der Laser 4 ebenfalls oberhalb der Codierstation 3 für die Flasche 2 angeordnet. Der Laserstrahl 10 wird in eine horizontale Ebene in Richtung zu der Codierstation hin emittiert, allerdings so, daß der Laserstrahl 10 nicht oberhalb der Codierstation 3, sondern auch vertikal beabstandet von der Codierstation 3 verläuft, so daß keine Überlagerungen von dem direkt von dem Laser 4 emittierten Laserstrahl 10 mit dem auf den Supportring 9 der Flasche 2 gelenkten Laserstrahl 10 entstehen. Ein erster feststehender Ablenkspiegel 14 lenkt den Laserstrahl 10 um einen etwa senkrechten Winkel in Richtung zu der Codierstation 3 hin ab. Von dem mittels der Steuereinheit ansteuerbaren Ablenkspiegel 15 wird der Laserstrahl 10 nach unten auf den Supportring 9 der Flasche 2 gelenkt, so daß der Laserstrahl 10 die Codemarkierung auf den Supportring 9 aufbringt. Auf einem Karussel 18 wird die Flasche 2 zu der Inspektionsvorrichtung 5 gefördert, wo mittels der CCDKamera 6 die Codemarkierung des Supportringes 9 aufgenommen und der Recheneinheit zugeführt wird, über welche auch der ansteuerbare Spiegel 15 angesteuert wird. Diese Ausführungsform ist besonders einfach, da eine minimale Anzahl von Spiegeln zur Ablenkung verwendet wird.

Im folgenden wird das erfindungsgemäße Verfahren erläutert. Eine Flasche 2, an welchem ein Supportring 9 angebracht ist, wird mittels einer Fördereinrichtung der Codierstation 3 zugeführt. Die Flasche 2 ist bezüglich dieser Fördereinrichtung fixiert und ein Laserstrahl 10 wird von einem oberhalb der Codierstation 3 angeordnetem Laser 4 von oben im wesentlichen entlang der Flaschenachse auf den Supportring 9 der Flasche 2 gelenkt. Dabei wird einer der Ablenkspiegel 15, welcher den Laserstrahl 10 auf den Supportring 9 der Flasche 10 lenkt, so angesteuert, daß der Laserstrahl 10 eine Codemarkierung 12 auf den Supportring 9 der Flasche 2 aufbringt. Die Codemarkierung 12 wird bevorzugt als Code aufgebracht, der aus Vertiefungen mit einer definierten Tiefe von bevorzugt 80 um besteht. Die Vertiefungen können zeitlich nacheinander aufgebracht werden. Dann wird die Flasche 2 zu einer Inspektionsvorrichtung 5 gefördert, in welcher die Codemarkierung auf dem Supportring 9 mittels einer CCD-Kamera aufgenommen wird und mittels der Recheneinheit, mit welcher der Ablenkspiegel 15 über die Steuereinheit angesteuert wird, ausgewertet wird. Danach wird die Flasche 2 z.B. über eine Einteilschnecke 7 einer weiteren Station 8 in der Flaschenvorrichtung zugeführt.

## Patentansprüche

1. Codierverfahren zum Aufbringen einer optisch lesbaren Codemarkierung auf eine Flasche (2), insbesondere eine Kunststoffflasche, bei welchem die Flasche zum Aufbringen der Codemarkierung mittels einer Fördereinrichtung (20) an einer Codierstation (3) vorbeigeführt wird, in welcher die Codemarkierung mit einem Laserstrahl in Form von Oberflächenveränderungen, insbesondere Vertiefungen, Verfärbungen oder Strukturveränderungen realisiert wird, **dadurch gekennzeichnet**, daß die Flasche (2) zusächst bezüglich der Fördereinrichtung in stehender Position fixiert wird und daß dann der Laserstrahl im wesentlichen entlang der Flaschenachse oder unter einem geringen Neigungswinkel von 7 bis 15° zur Flaschenachse auf eine im wesentlichen horizontale Fläche der Flasche (2) gelenkt und zum Codieren über die Fläche bewegt wird, so daß die die Codemarkierung bildenden Vertiefungen symmetrisch zu der Flaschenachse angebracht werden.

2. Codierverfahren nach Anspruch 1, **dadurch** **gekennzeichnet**, daß der Neigungswinkel zwischen dem Laserstrahl und der Flaschenachse 10 ° beträgt.

3. Verfahren nach Anspruch 1 oder 2, **dadurch** **gekennzeichnet**, daß die Codemarkierung (12) auf die Oberseite eines an der Flasche (2) angebrachten Supportringes (9) aufgebracht wird.

4. Verfahren nach einem der Ansprüche 1 bis 2, **dadurch** **gekennzeichnet**, daß die Codemarkierung (12) auf eine eingezogene Bodenfläche der Flasche (2) aufgebracht wird.

5. Verfahren nach einem der Ansprüche 1 bis 4, **dadurch gekennzeichnet**, daß die Codemarkierung (12) aus strichförmigen oder punktförmigen Vertiefungen gebildet wird.

6. Verfahren nach einem der Ansprüche 1 bis 5, **dadurch gekennzeichnet**, daß die Vertiefungen mit einer definierten Tiefe ausgebildet werden.

7. Verfahren nach Anspruch 6, **dadurch gekennzeichnet**, daß die Tiefe > 1 um bis ca. 120 um beträgt.

8. Verfahren nach Aspruch 6, **dadurch gekennzeichnet**, daß die Tiefe 80 um beträgt.

9. Verfahren nach einem der Ansprüch 1 bis 8, **dadurch gekennzeichnet**, daß die die Codemarkierung (12) bildenden Vertiefungen zeitlich nacheinander aufgebracht werden.

10. Verfahren nach einem der Ansprüche 1 bis 9, **dadurch gekennzeichnet**, daß die Flasche (2) eine Inspektionsvorrichtung (5) durchläuft, in welcher die Codemarkierung (12) mittels einer elektronischen Kamera (6) aufgenommen wird.

11. Verfahren nach wenigstens einem der vorangegangenen Ansprüche, **dadurch gekennzeichnet**, daß beim oder nach dem Aufbringen der Vertiefungen die Flasche im Bereich des Aufbringungsortes einem Druckluftstrahl ausgesetzt wird.

12. Verfahren nach einem der vorangegangenen Ansprüche, **dadurch gekennzeichnet**, daß die Bewegung des Laserstrahls (10) zum Aufbringen der Codemarkierung (12) mit einer Recheneinheit gesteuert wird, mit welcher auch ein Auslesen der mit der elektronischen Kamera (6) aufgenommenen Codemarkierung (12) und eine Auswertung der Codemarkierung (12) erfolgt.

13. Codiervorrichtung zum Aufbringen einer optisch lesbaren Codemarkierung auf eine Flasche (2), insbesondere auf eine Kunststofflasche, mit einer Flaschen enthaltenden Fördereinrichtung (20), mit welcher die Flasche an einer Codierstation (3) vorbeigeführt wird und mit einem Laser (4) zum Aufbringen von die Codemarkierung bildenden Oberflächenveränderungen, insbesondere Vertiefungen, in der Codierstation, **dadurch gekennzeichnet**, daß eine Ablenkeinrichtung und eine Steuereinheit vorgesehen sind, mit welcher der Laserstrahl (10) in der Codierstation (3) im wesentlichen entlang der Flaschenachse oder unter einem geringen Neigungswinkel von ca. 10° zur Flaschenachse auf eine eine im wesentlichen horizontale Fläche der relativ zu der Fördervorrichtung in stehender Position fixierten Flasche (2) gelenkt und zum Codieren über diese Fläche bewegt wird, um die die Codemarkierung bildenden Vertiefungen symmetrisch zur Flaschenachse anzubringen.

14. Codiervorrichtung nach Anspruch 13, **dadurch** **gekennzeichnet**, daß eine Inspektionsvorrichtung (5) vorgesehen ist, durch die die Flasche (2) mit der Fördereinrichtung gefördert wird, und daß in der Inspektionsvorrichtung eine elektronische Kamera (6) zum Aufnehmen der Codemarkierung (12) vorgesehen ist.

15. Codiervorrichtung nach Anspruch 14, **dadurch gekennzeichnet**, daß als elektronische Kamera (6) eine CCD-Kamera vorgesehen ist.

16. Codiervorrichtung nach Anspruch 14 oder 15, **dadurch gekennzeichnet**, daß eine Recheneinheit vorgesehen ist, die sowohl die Daten der Steuereinheit für die Ablenkeinrichtung des Laserstrahls (10) als auch die Bilddaten der elektronischen Kamera (6) erarbeitet und miteinander vergleicht.

17. Codiervorrichtung nach einem der Ansprüche 13 bis 16, **dadurch gekennzeichnet**, daß die Ablenkeinrichtung je nach Positionierung und/oder Erfordernissen mehrere Ablenkspiegel (14, 15) umfaßt, die mittels der Steuereinheit so verkippt werden, daß der Laserstrahl (10) die zur Erzeugung der Codemarkierung (12) notwendige Bewegung beschreibt.

18. Codiervorrichtung nach Anspruch 17, **dadurch gekennzeichnet**, daß die Ablenkspiegel (13, 14, 15) so angeordnet sind, daß der Laserstrahl (10) auf die Oberfläche eines an den zu codierenden Flaschen (2) angeordneten Supportringes (9) gelenkt wird.

19. Codiervorrichtung nach einem der Ansprüche 13 bis 18, **dadurch gekennzeichnet**, daß vier Ablenkspiegel (13, 14, 15) vorgesehen sind, von welchen zwei der Ablenkspiegel (13, 14) feststehen und der dritte und vierte der Ablenkspiegel (15) mittels der Steuereinheit zum Aufbringen der Codemarkierung verkippt werden.

20. Codiervorrichtung nach Anspruch 19, **dadurch gekennzeichnet**, daß der erste feststehende Ablenkspiegel (13) so angeordnet ist, daß er den Laserstrahl (10) senkrecht nach unten ablenkt.

21. Codiervorrichtung nach Anspruch 19 oder 20, **dadurch gekennzeichnet**, daß der zweite feststehende Ablenkspiegel (14) so angeordnet ist, daß er den Laserstrahl (10) in eine horizontale Ebene, in Richtung zu der Codierstation (3) hin ablenkt.

22. Codiervorrichtung nach einem der Ansprüche 19 bis 21, **dadurch gekennzeichnet**, daß der dritte, ansteuerbare Ablenkspiegel so angeordnet ist, daß er den Laserstrahl (10) steuerbar in eine horizontale Richtung ablenkt und der vierte Ablenkspiegel eine Bewegung des Laserstrahls in einer dazu senkrechten Richtung nach unten ermöglicht, so daß der von dem vierten Ablenkspiegel abgelenkte Laserstrahl (10) im wesentlichen entlang der Symmetrieachse der zu codierenden Flasche (2) verläuft.

23. Codiervorrichtung nach einem der Ansprüche 13 bis 18, **dadurch gekennzeichnet**, daß der Laser (4) so angeordnet ist, daß der Laserstrahl (10) von der der Codierstation (3) zugewandten Seite des Lasers (4) in einer horizontalen Ebene in Richtung zu der Codierstation (3) hin mit einem vertikalen Abstand zu der Codierstation (3) emittiert wird.

24. Codiervorrichtung nach Anspruch 23, **dadurch gekennzeichnet**, daß zwei Ablenkspiegel (14, 15) vorgesehen sind, von denen der erste (14) während des Aufbringens der Codemarkierung auf die Flasche feststeht und so angeordnet ist, daß der Laserstrahl (10) horizontal in einem etwa senkrechten Winkel abgelenkt wird und der zweite Ablenkspiegel (15) mittels der Steuereinheit verkippbar und so angeordnet ist, daß der Laserstrahl (10) nach unten auf die Fläche mit horizontaler Komponente der Flasche gelenkt wird.

25. Codiervorrichtung nach einem der Ansprüche 14 bis 24, **dadurch gekennzeichnet**, daß die elektronische Kamera (6) in Bewegungsrichtung der Fördereinrichtung hinter der Codierstation (3) und oberhalb der codierten Flasche (2) angeordnet ist, so daß die Codemarkierung (12) auf der Flasche (2) von oben fotografiert werden kann.

26. Codiervorrichtung nach Anspruch 25, **dadurch gekennzeichnet**, daß die elektronische Kamera (6) unmittelbar über dem oberen Ende der Flasche (2) angeordnet ist.

27. Codiervorrichtung nach Anspruch 25, **dadurch gekennzeichnet**, daß die elektronische Kamera (6) beabstandet zu dem oberen Ende der Flasche (2) angeordnet ist.

28. Codiervorrichtung nach Anspruch 17, **dadurch gekennzeichnet**, daß die Ablenkspiegel so angeordnet sind, daß der Laserstrahl (10) auf die eingezogene Bodenfläche der zu codierenden Flasche (2) gelenkt wird.

29. Codiervorrichtung nach Anspruch 28, **dadurch** **gekennzeichnet**, daß die elektronische Kamera (6) in Bewegungsrichtung der Fördereinrichtung hinter der Codierstation (3) unterhalb oder oberhalb der codierten Flasche (2) angeordnet ist, so daß die Codemarkierung (12) auf der Bodenfläche der Flasche (2) fotografiert werden kann.

## Claims

1. Coding process for applying an optically readable code mark on to a bottle (2), in particular a plastic bottle, whereby the bottle on to which the code mark is to be applied is conveyed by means of a conveying apparatus (20) past a coding station (3) in which the code mark in the form of surface modifications, in particular depressions, discolorations or changes of constitution are made with a laser beam, characterized in that the bottle (2) is first of all fixed in an upright position with respect to the conveying apparatus and in that the laser beam is then directed essentially along the axis of the bottle or at a small angle of 7 to 15° to the axis of the bottle on to an essentially horizontal surface of the bottle (2) and is moved over the surface to produce the code so that the depressions forming the code mark are applied symmetrically with respect to the axis of the bottle.

2. Coding process accorcing to Claim 1, characterized in that the angle between the laser beam and the axis of the bottle is 10°.

3. Process according to Claim 1 or 2, characterized in that the code mark (12) is applied on the top side of a support ring (9) attached to the bottle (2).

4. Process according to one of Claims 1 to 2, characterized in that the code mark (12) is applied to a recessed bottom surface of the bottle (2).

5. Process according to one of Claims 1 to 4, characterized in that the code mark (12) is made up of depressions in the form of lines or dots.

6. Process according to one of Claims 1 to 5, characterized in that the depressions are formed with a defined depth.

7. Process according to Claim 6, characterized in that the depth is over 1 µm and up to approx. 120 µm.

8. Process according to Claim 6, characterized in that the depth is 80 µm.

9. Process according to one of Claims 1 to 8, characterized in that the depressions forming the code mark (12) are applied one after the other in time.

10. Process according to one of Claims 1 to 9, characterized in that the bottle (2) passes through an inspection device (5) in which the code mark (12) is photographed with an electronic camera (6).

11. Process according to at least one of the preceding claims, characterized in that upon or after application of the depressions the bottle is subjected to a jet of compressed air in the region of application.

12. Process according to one of the preceding claims, characterized in that the motion of the laser beam (10) is controlled, for the application of the code mark (12), by a data processor unit which also executes a readout of the code mark (12) photographed with the electronic camera (6), and an evaluation of the code mark (12).

13. Coding device for applying an optically readable code mark on to a bottle (2), in particular a plastic bottle, with a bottle-carrying conveying apparatus (20) which conveys the bottle past a coding station (3) and with a laser (4) for applying surface modifications forming the code mark, in particular depressions, in the coding station, characterized in that a deflecting apparatus and a control unit are provided whereby the laser beam (10) is directed in the coding station (3) essentially along the axis of the bottle or at a small angle of approx. 10° to the axis of the bottle on to an essentially horizontal surface of the bottle (2) which is fixed in an upright position in relation to the conveying device and is moved over the said surface to perform the coding by applying the depressions forming the code mark symmetrically with respect to the axis of the bottle.

14. Coding device according to Claim 13, characterized in that an inspection device (5) is provided through which the bottle (2) is conveyed by the conveying apparatus, and in that an electronic camera (6) is provided in the inspection device to photograph the code mark (12).

15. Coding device according to Claim 14, characterized in that a CCD camera is provided as the electronic camera (6).

16. Coding device according to Claim 14 or 15, characterized in that a data processor unit is provided which processes both the control-unit data for the laser beam deflecting apparatus and the picture data from the electronic camera (6), and compares these with each other.

17. Coding device according to one of Claims 13 to 16, characterized in that the deflecting apparatus comprises according to positioning and/or requirements a number of deflecting mirrors (14, 15) which are tilted by means of the control unit so that the laser beam (10) describes the necessary motion to produce the code mark (12).

18. Coding device according to Claim 17, characterized in that the deflecting mirrors (13, 14, 15) are arranged in such a way that the laser beam (10) is directed on to the surface of a support ring (9) arranged on the bottles (2) to be coded.

19. Coding device according to one of Claims 13 to 18, characterized in that four deflecting mirrors (13, 14, 15) are provided, of which two (13, 14) are fixed and the third and fourth (15) are tilted by means of the control unit to apply the code mark.

20. Coding device according to Claim 19, characterized in that the first fixed deflecting mirror (13) is arranged so that it deflects the laser beam (10) vertically downwards.

21. Coding device according to Claim 19 or 20, characterized in that the second fixed deflecting mirror (14) is arranged so that it deflects the laser beam (10) into a horizontal plane, towards the coding station (3).

22. Coding device according to one of Claims 19 to 21, characterized in that the third, controllable deflecting mirror is arranged so that it deflects the laser beam (10) controllably in a horizontal direction and the fourth deflecting mirror allows a downwards movement of the laser beam in a direction perpendicular thereto, so that the laser beam (10) deflected by the fourth deflecting mirror extends essentially along the axis of symmetry of the bottle (2) to be coded.

23. Coding device according to one of Claims 13 to 18, characterized in that the laser (4) is arranged so that the laser beam (10) is emitted from the side of the laser (4) facing the coding station (3) in a horizontal plane towards the coding station (3), at a vertical distance from the coding station (3).

24. Coding device according to Claim 23, characterized in that two deflecting mirrors (14, 15) are provided, of which the first (14) is fixed during application of the code mark to the bottle and is positioned so that the laser beam (10) is deflected horizontally at a more or less perpendicular angle and the second deflecting mirror (15) can be tilted by means of the control unit and is positioned so that the laser beam is directed downwards on to the surface of the bottle with a horizontal component.

25. Coding device according to one of Claims 14 to 24, characterized in that the electronic camera (6) is arranged above the coded bottle (2) and behind the coding station (3) (i.e. "behind" in the direction of motion of the conveying apparatus), so that the code mark (12) on the bottle (2) can be photographed from above.

26. Coding device according to Claim 25, characterized in that the electronic camera (6) is arranged immediately above the top end of the bottle (2).

27. Coding device according to Claim 25, characterized in that the electronic camera (6) is arranged at a distance from the top end of the bottle (2).

28. Coding device according to Claim 17, characterized in that the deflecting mirrors are arranged so that the laser beam (10) is directed on to the recessed bottom surface of the bottle (2) to be coded.

29. Coding device according to Claim 28, characterized in that the electronic camera (6) is arranged under or over the coded bottle (2) behind the coding station (3) (i.e. "behind" in the direction of motion of the conveying apparatus) so that the code mark (12) on the bottom of the bottle (2) can be photographed.

## Revendications

1. Procédé de codage pour la réalisation d'un marquage codé convenant pour la lecture optique sur une bouteille (2), en particulier une bouteille en matière plastique, dans lequel la bouteille est amenée, pour la réalisation du marquage codé, à l'aide d'un dispositif de transport (20), à un poste de codage (3) dans lequel le marquage codé est réalisé, à l'aide d'un faisceau laser, sous forme de modifications de la surface, en particulier de creux, décolorations ou modifications de structure, caractérisé en ce que la bouteille (2) est tout d'abord fixée en position debout par rapport au dispositif de transport et en ce que le faisceau laser est alors défléchi, sensiblement le long de l'axe de la bouteille ou suivant un faible angle d'inclinaison de 7 à 15° par rapport à l'axe de la bouteille, sur une surface sensiblement horizontale de la bouteille (2) et est déplacé au-dessus de la bouteille pour le codage, de sorte que les creux constituant le marquage codé sont apportés de manière symétrique à l'axe de la bouteille.

2. Procédé de codage suivant la revendication 1, caractérisé en ce que l'angle d'inclinaison entre le faisceau laser et l'axe de la bouteille est de 10°.

3. Procédé suivant la revendication 1 ou 2, caractérisé en ce que le marquage codé (12) est apporté sur la face supérieure d'un anneau de support (9) placé sur la bouteille (2).

4. Procédé suivant l'une des revendications 1 à 2, caractérisé en ce que le marquage codé (12) est apporté sur une surface de fond en retrait de la bouteille (2).

5. Procédé suivant l'une des revendications 1 à 4, caractérisé en ce que le marquage codé (12) est constitué de creux en forme de trait ou de point.

6. Procédé suivant l'une des revendications 1 à 5, caractérisé en ce que les creux sont réalisés avec une profondeur définie.

7. Procédé suivant la revendication 6, caractérisé en ce que la profondeur est de > 1 µm à environ 120 µm.

8. Procédé suivant la revendication 6, caractérisé en ce que la profondeur est de 80 µm.

9. Procédé suivant l'une des revendications 1 à 8, caractérisé en ce que les creux constituant le marquage codé (12) sont apportés temporalement l'un après l'autre.

10. Procédé suivant l'une des revendications 1 à 9, caractérisé en ce que la bouteille (2) traverse un dispositif d'inspection (5) dans lequel le marquage codé (12) est photographié à l'aide d'une caméra électronique (6).

11. Procédé suivant au moins l'une des revendications précédentes, caractérisé en ce que, lors de ou après la réalisation des creux, la bouteille est soumise, à l'endroit de la réalisation, à un jet d'air comprimé.

12. Procédé suivant l'une des revendications précédentes, caractérisé en ce que le mouvement du faisceau laser (10) pour la réalisation du marquage codé (12) est commandé par un calculateur avec lequel se fait également une lecture du marquage codé (12) photographié à l'aide de la caméra électronique (6) et une évaluation du marquage codé (12).

13. Dispositif de codage pour la réalisation d'un marquage codé convenant pour la lecture optique sur une bouteille (2), en particulier sur une bouteille en matière plastique, avec un dispositif de transport (20) contenant la bouteille, par lequel la bouteille est amenée à un poste de codage (3) pour la réalisation de modifications de surface constituant le marquage codé, en particulier des creux, au poste de codage, caractérisé en ce qu'il est prévu un dispositif de déflexion et une unité de commande par lesquels le faisceau laser (10) est défléchi, au poste de codage (3), sensiblement le long de l'axe de la bouteille ou suivant un faible angle d'inclinaison d'environ 10° par rapport à l'axe de la bouteille, sur une surface sensiblement horizontale de la bouteille (2) fixée en position debout par rapport au dispositif de transport et est déplacé au-dessus de la bouteille pour apporter les creux constituant le codage de manière symétrique à l'axe de la bouteille.

14. Dispositif de codage suivant la revendication 13, caractérisé en ce qu'il est prévu un dispositif d'inspection (5) à travers lequel la bouteille (2) est transportée par le dispositif de transport et que dans le dispositif d'inspection est prévue une caméra électronique (6) destinée à photographier le marquage codé (12).

15. Dispositif de codage suivant la revendication 14, caractérisé en ce qu'il est prévu, comme caméra électronique (6), une caméra à couplage de charge.

16. Dispositif de codage suivant la revendication 14 ou 15, caractérisé en ce qu'il est prévu un calculateur qui traite et compare entre elles tant les données de l'unité de commande pour le dispositif de déflexion du faisceau laser (10) que les données d'image de la caméra électronique (6).

17. Dispositif de codage suivant l'une des revendications 13 à 16, caractérisé en ce que le dispositif de déflexion comprend, selon le positionnement et/ou les nécessités, plusieurs miroirs de déflexion (14, 15) qui sont pivotés, à l'aide de l'unité de commande, de telle manière que le faisceau laser (10) décrit le mouvement requis pour la réalisation du marquage codé (12).

18. Dispositif de codage suivant la revendication 17, caractérisé en ce que les miroirs de déflexion (13, 14, 15) sont disposés de telle manière que le faisceau laser (10) est défléchi sur la surface d'un anneau de support (9) disposé sur les bouteilles (2) à coder.

19. Dispositif de codage suivant l'une des revendications 13 à 18, caractérisé en ce qu'il est prévu quatre miroirs de déflexion (13, 14, 15) dont deux des miroirs de déflexion (13, 14) sont fixes et les troisième et quatrième des miroirs de déflexion (15) sont pivotés, à l'aide de l'unité de commande, pour la réalistion du marquage codé.

20. Dispositif de codage suivant la revendication 19, caractérisé en ce que le premier miroir de déflexion fixe (13) est disposé de telle manière qu'il défléchit le faisceau laser (10) verticalement vers le bas.

21. Dispositif de codage suivant la revendication 19 ou 20, caractérisé en ce qu'il défléchit le faisceau laser (10) dans un plan horizontal, en direction du poste de codage.

22. Dispositif de codage suivant l'une des revendications 19 à 21, caractérisé en ce que le troisième miroir de déflexion réglable est disposé de telle manière qu'il défléchit le faisceau lumineux (10) de manière réglable dans une direction horizontale et que le quatrième miroir de déflexion permet un mouvement du faisceau laser vers le bas, dans une direction perpendiculaire à cette dernière, de sorte que le faisceau laser (10) défléchi par le quatrième miroir de déflexion s'étend sensiblement le long de l'axe de symétrie de la bouteille à coder (2).

23. Dispositif de codage suivant l'une des revendications 13 à 18, caractérisé en ce que le laser (4) est disposé de telle manière que le faisceau laser (10) est émis, du côté du laser (4) orienté vers le poste de codage (3), dans un plan horizontal, en direction du poste de codage (3), à une distance verticale du poste de codage (3).

24. Dispositif de codage suivant la revendication 23, caractérisé en ce qu'il est prévu deux miroirs de déflexion (14, 15) dont le premier (14) est, pendant la réalisation du marquage codé, fixe sur la bouteille et disposé de telle manière que le faisceau laser (10) est défléchi horizontalement suivant un angle environ droit et en ce que le second miroir de déflexion (15) peut être pivoté par l'unité de commande et est disposé de telle manière que la faisceau laser (10) est défléchi vers le bas, sur la surface à composante horizontale de la bouteille.

25. Dispositif de codage suivant l'une des revendications 14 à 24, caractérisé en ce que la caméra électronique (6) est disposée, dans le sens de déplacement du dispositif de transport, derrière le poste de codage (3) et au-dessus de la bouteille codée (2), de sorte que le marquage codé (12) sur la bouteille (2) peut être photographié d'en haut.

26. Dispositif de codage suivant la revendication 25, caractérisé en ce que la caméra électronique (6) est disposée immédiatement au-dessus de l'extrémité supérieure de la bouteille (2).

27. Dispositif de codage suivant la revendication 25, caractérisé en ce que la caméra électronique (6) est disposée à distance de l'extrémité supérieure de la bouteille (2).

28. Dispositif de codage suivant la revendication 17, caractérisé en ce que les miroirs de déflexion sont disposés de telle manière que le faisceau laser (10) est défléchi sur la surface de fond en retrait de la bouteille (2) à coder.

29. Dispositif de codage suivant la revendication 28, caractérisé en ce que la caméra électronique (6) est disposée, dans le sens de déplacement du dispositif de transport, derrière le poste de codage (3), au-dessous ou au-dessus de la bouteille codée (2), de sorte que le marquage codé (12) sur la surface de fond de la bouteille (2) peut être photographié.
